# EUROPÄISCHE PATENTANMELDUNG

(11) **EP 1 724 454 A1**
(43) Veröffentlichungstag der Anmeldung: **22.11.2006**
(21) Anmeldenummer: 05010272.2
(22) Anmeldetag: 11.05.2005
(51) Int. Cl.: F02C 7/22

(54) **Brennstoffzuführung für eine Gasturbine mit einem Umlenkbereich**

(71) Anmelder: SIEMENS AKTIENGESELLSCHAFT, 80333 München (DE)
(72) Erfinder: Barbeln, Claudia, 46149 Oberhausen (DE); Böttcher, Andreas, Dr., 40882 Ratingen (DE); Fischer, Marcus, 56589 Niederbreitbach (DE); Huth, Michael, Dr., 45239 Essen (DE); Kleinfeld, Jens, 45470 Mülheim an der Ruhr (DE); Krusch, Claus, 45473 Mülheim an der Ruhr (DE); Meisl, Jürgen, Dr., 45478 Mülheim an der Ruhr (DE)

(57) **Zusammenfassung**

Eine Brennstoffzuführung (10) für eine Gasturbine mit einem Bauteil (12), in dem ein Kanal (14, 24, 38) ausgebildet ist, mittels dem Brennstoff hinsichtlich seiner Strömungsrichtung (22) umgelenkt werden kann, ist erfindungsgemäß dadurch gekennzeichnet, dass ein Umlenkbereich (34) des Kanals (14, 24, 38) mit einem vom Brennstoff durchströmbaren Rohrkrümmer (30) gestaltet ist, welcher am Umlenkbereich (34) mit Abstand zu dem den Kanal (1,4 24, 38) aufnehmenden Bauteil (12) gehaltert ist.

## Beschreibung

Die Erfindung betrifft eine Brennstoffzuführung für eine Gasturbine mit einem Bauteil, in dem ein Kanal ausgebildet ist, mittels dem Brennstoff hinsichtlich seiner Strömungsrichtung umgelenkt werden kann. Ferner betrifft die Erfindung eine Gasturbine mit einer derartigen Brennstoffzuführung.

Insbesondere bei Gasturbinen werden Brennstoffzuführungskanäle oftmals in Bauteilen beispielsweise durch Bohren oder Fräsen eingeformt. Durch die Kanäle wird dann im Betrieb der Gasturbine Brennstoff beispielsweise zu einer Brennkammer zugeführt. In der Brennkammer herrschen während des Betriebs vergleichsweise sehr hohe Temperaturen, während der zugeführte Brennstoff, wie beispielsweise Erdgas, vergleichsweise kalt ist. An den genannten Bauteilen kann es daher unter Umständen zu sehr hohen thermischen Spannungen kommen, welche einerseits transient das Bauteil ermüden können und andererseits aber auch im stationären Zustand der Gasturbine zu einer ungleichmäßigen Temperaturverteilung führen und dadurch das Bauteil dauerhaft belasten können. Dieser Effekt hoher thermischer Spannungen tritt insbesondere in jenen Bereichen auf, an denen die Strömungsrichtung des zuzuführenden Brennstoffs umgelenkt werden muss. Im Bereich der Umlenkung, so hat sich gezeigt, ergibt sich eine besonders starke Kühlung, eine so genannte Prallkühlung, der den Zuführungskanal umgebenden Bauteile durch den im Kanal strömenden vergleichsweise kalten Brennstoff.

Um die sich dadurch ergebenden Probleme zu lösen, ist es bekannt, den durch derartige Kanäle zugeführten Brennstoffmassenstrom zu reduzieren. Eine solche Reduzierung führt zwar zu einer Verbesserung der Lebensdauer der beteiligten Bauteile, bringt aber zugleich mit sich, dass die Wirksamkeit bzw. Zielsetzung der eigentlich gewünschten Brennstoffzuführung aufgrund des reduzierten Massenstroms nur begrenzt oder gar nicht erreicht werden kann. So hat beispielsweise eine Reduzierung des Massenstroms um nur wenige Prozent bereits dazu geführt, dass der zur Verfügung stehende Spielraum zum Justieren der Brennanlage an bekannten Gasturbinen erheblich abnimmt. Das Betriebsverhalten der Gasturbine kann dann nicht ausreichend gut getrimmt werden, weil der zur Verfügung stehende "Hebel" nicht mehr groß genug ist. Dies hat insbesondere negative Auswirkungen auf die angestrebte Optimierung des Betriebsverhaltens bezüglich Schadstoffemission und Verbrennungseigenschaften innerhalb der Brennkammer.

Es ist eine Aufgabe der Erfindung eine Gasturbine mit einer Brennstoffzuführung bereitzustellen, bei der die oben genannten Nachteile überwunden sind und insbesondere ein großer Spielraum bei der Zuführung eines Brennstoffmassenstroms durch den genannten Kanal zur Verfügung steht.

Die Aufgabe ist erfindungsgemäß mit einer gattungsgemäßen Brennstoffzuführung gelöst, bei der ein Umlenkbereich des Kanals mit einem vom Brennstoff durchströmbaren Rohrkrümmer gestaltet ist, welcher am Umlenkbereich mit Abstand zu dem den Kanal aufnehmenden Bauteil gehaltert ist. Ferner ist die Aufgabe mit einer Gasturbine gelöst, welche mit einer derartigen erfindungsgemäßen Brennstoffzuführung versehen ist und bei der der Umlenkbereich insbesondere zum Umlenken von Brennstoff aus einem axialen Kanal in einen Umfangskanal vorgesehen ist.

Mit anderen Worten ist erfindungsgemäß der als kritisch erkannte Bereich der Umlenkung von zugeführtem Brennstoff mittels eines gekrümmten Rohres gestaltet, welches von einem umgebenden, ebenfalls einen Teil der Brennstoffzuführung bildenden Bauteil beabstandet angeordnet ist. Der erfindungsgemäße Rohrkrümmer befindet sich sozusagen im Inneren dieses Bauteils und ist dabei von einer "Isolierschicht" umgeben, welche einen direkten Austausch von Wärmeenergie zwischen dem durchströmten Rohrkrümmer und dem umgebenden Bauteil weitgehend vermeiden.

Auf diese Weise ist erfindungsgemäß verhindert, dass der hinsichtlich seiner Strömungsrichtung umzulenkende Brennstoff in einem Strömungskanal beispielsweise unmittelbar auf eine Stirnfläche dieses Kanals prallt, wie es im Stand der Technik der Fall ist.

Die Erfindung baut dabei auf der Erkenntnis auf, dass es durch ein derartiges Auftreffen der Brennstoffströmung auf Kanalwandungen zu einer vergleichsweise starken Prallkühlung mit hohen Wärmeübergangskoeffizienten kommt. Eine solche Prallkühlung ist erfindungsgemäß hingegen durch den im genannten Kanal angeordneten Rohrkrümmer zumindest soweit verhindert bzw. verringert, als dass durch den erfindungsgemäß geleiteten Brennstoff lediglich der Rohrkrümmer, nicht aber das ihn umgebende Bauteil gekühlt wird.

Bei einer vorteilhaften Weiterbildung der erfindungsgemäßen Brennstoffzuführung ist der Rohrkrümmer derart in dem genannten Bauteil gehaltert, dass sich in dem Abstandsraum zwischen Rohrkrümmer und Bauteil Brennstoff befinden kann. Wenngleich es für eine besonders starke Isolierwirkung in der Umgebung des erfindungsgemäß vorgesehenen Rohrkrümmers von Vorteil ist, wenn dieser von Isoliermaterial oder Gas umgeben ist, kann dieser Umgebungsbereich durchaus auch von Brennstoff umströmt sein. Es hat sich nämlich gezeigt, dass die erfindungsgemäß gewünschte Isolierwirkung auch von (nur wenig strömendem) Brennstoff erreicht wird. Zugleich kann eine derartige Brennstoffzuführung sehr einfach konstruiert sein und besonders kostengünstig hergestellt werden.

Die oben genannten Vorteile können beispielsweise dadurch erreicht werden, dass der erfindungsgemäß vorgesehene Rohrkrümmer einen Eintritt sowie einen Austritt für Brennstoff aufweist und nur im Bereich des Eintritts an dem ihn umgebenden Bauteil befestigt ist.

Eine konstruktiv besonders einfach gestaltete Lösung ergibt sich ferner dadurch, dass an dem erfindungsgemäßen Rohrkrümmer ein Einsatzstück vorgesehen ist, welches in das umgebende Bauteil eingesetzt und in dem der Rohrkrümmer seinerseits befestigt ist.

Zur Befestigung des Rohrkrümmers in dem genannten Bauteil oder dem genannten Einsatzstück ist besonders vorteilhaft ein Schrumpfsitz geeignet. Ein solcher Schrumpfsitz kann beispielsweise durch_eine in dem Einsatzstück ausgebildete Bohrung und eine entsprechend an der Außenseite des Rohrkrümmers ausgebildeten Passung gestaltet sein. Das Einsatzstück kann seinerseits besonders vorteilhaft an dem genannten Bauteil mittels einer Schraubverbindung angeordnet und befestigt sein. Mit derartigen Verbindungen ist zum Einen eine hohe Lagegenauigkeit des Rohrkrümmers am Einsatzstück und ferner eine gute Abdichtung des erfindungsgemäß gestalteten Kanals zum Zuführen von Brennstoff geschaffen.

Um die oben genannte Isolierwirkung zwischen dem erfindungsgemäßem Rohrkrümmer und dem ihn umgebenden Bauteil besonders weitreichend zu erzielen, ist es von Vorteil, wenn der Rohrkrümmer in dem genannten Bauteil oder dem Einsatzstück derart befestigt ist, dass sein Krümmerabschnitt in dem zum Bauteil hin gebildeten Abstands-Isolierraum frei hineinragt.

Alternativ oder zusätzlich kann der Abstandsraum vorteilhaft mit einer Nut gebildet sein, welche in dem Bauteil ausgeformt und in welche dann der Rohrkrümmer eingesetzt worden ist.

Um mit der erfindungsgemäßen Brennstoffzuführung eine sehr weitgehende Aufteilung bzw. Umlenkung von Brennstoff auf mehrere Brennstoffkanäle zu erzielen, ist es von Vorteil, wenn der erfindungsgemäße Rohrkrümmer einen Eintritt und einen Austritt für Brennstoff aufweist und in Strömungsrichtung hinter dem Austritt dieses Rohrkrümmers dann ein Querkanal ausgebildet ist, mittels dem der aus dem Rohrkrümmer austretende Brennstoff in zwei voneinander verschiedene Richtungen abgeleitet wird.

Ein derartig vor dem erfindungsgemäßen Rohrkrümmer ausgebildeten Querkanal kann besonders vorteilhaft mittels einer in dem Bauteil ausgebildeten Vertiefung gestaltet sein, welche mittels einer Abdeckung zumindest abschnittsweise verschlossen ist. Der dann aus dem erfindungsgemäßen Rohrkrümmer ausströmende Brennstoff trifft bevorzugt auf die Abdeckung auf und trägt im Wesentlichen nur zu deren Kühlung bei. Sich möglicherweise ergebende thermische Spannungen können dann durch eine geringfügige Bewegung der beispielsweise als Deckblech gestalten Abdeckung an dem restlichen Bauteil ausgeglichen werden.

Die derart erfindungsgemäß erzielte Umlenkung von Brennstoff an einer Brennstoffzuführung einer Gasturbine ist, wie erwähnt, besonders vorteilhaft zum Umlenken von Brennstoff aus einem Axialkanal oder aber aus einem Radialkanal in einen Umfangskanal geeignet. Sie sollte daher besonders vorteilhaft für eine Brennstoffzuführung an einer C-Stage einer stationären Gasturbine (insbesondere einer NGF-Gasturbine (natural gas-fueld)) vorgesehen sein.

Nachfolgend wird ein Ausführungsbeispiel einer erfindungsgemäßen Brennstoffzuführung anhand der beigefügten schematischen Zeichnungen näher erläutert. Es zeigt:
Fig. 1 eine perspektivische Teilansicht eines Ausführungsbeispiels einer erfindungsgemäßen Brennstoffzuführung für eine Gasturbine,
Fig. 2 die perspektivische Ansicht gemäß Fig. 1 der Brennstoffzuführung mit teilweise demontierten Bauteilen,

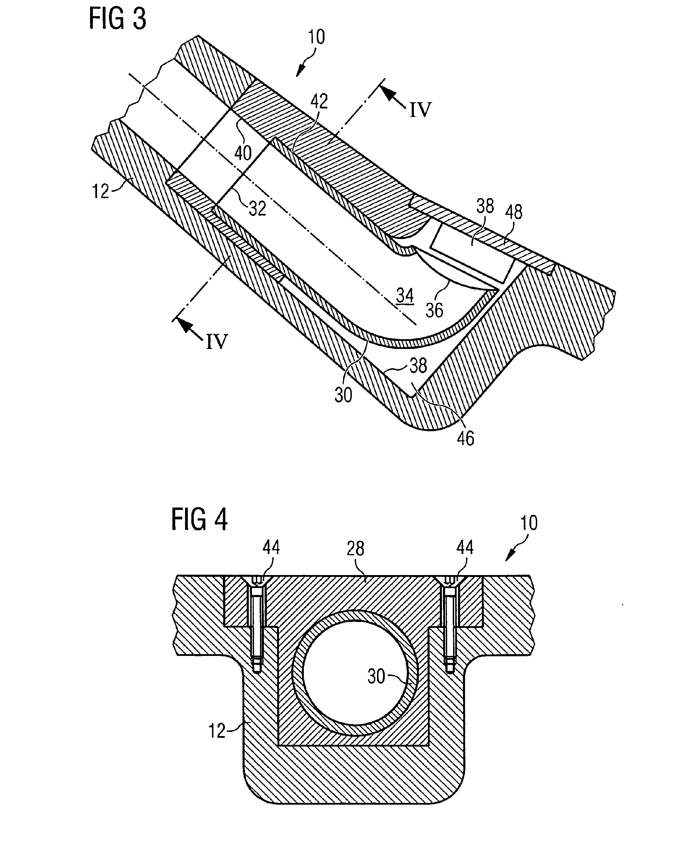

Fig. 3 den Schnitt III-III gemäß Fig. 1 in vergrößerter Ansicht und
Fig. 4 den Schnitt IV-IV gemäß Fig. 3.

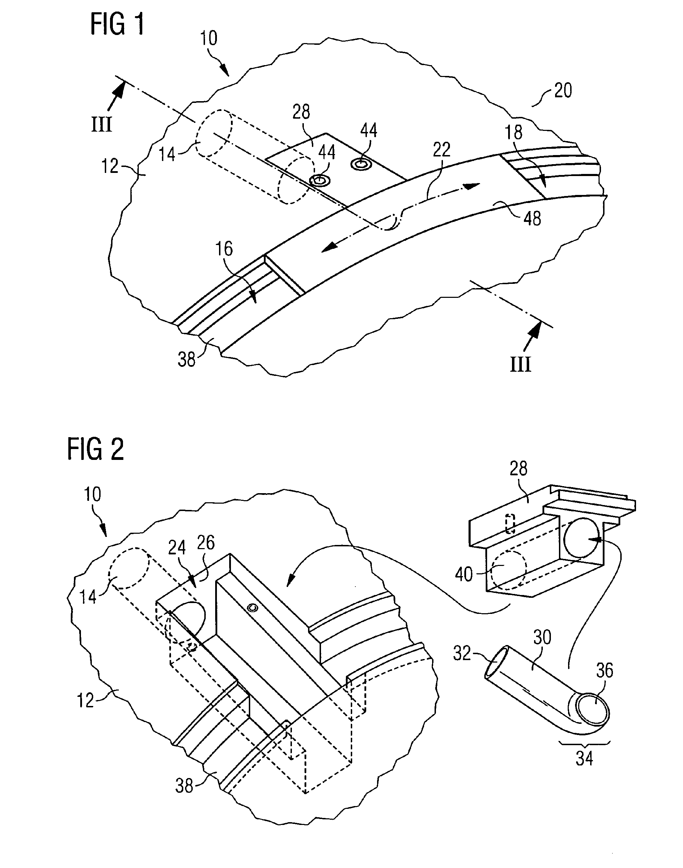

In den Figuren ist ein Teil einer erfindungsgemäßen Brennstoffzuführung 10 für eine Gasturbine veranschaulicht, bei der in einem ein Gehäuse bildenden Bauteil 12 ein Einströmkanal 14 für zuzuführenden Brennstoff ausgebildet ist. Der Brennstoff soll im Betrieb der Gasturbine zu zwei Ausströmbereichen 16 und 18 gefördert werden, welche an der Innenseite des Bauteils 12 zu einer Brennkammer 20 hin münden. Bei dieser Zufuhr von Brennstoff in die Brennkammer 20 hinein muss der durch den Einströmkanal 14 einströmende Brennstoff, wie beispielsweise Erdgas, entlang einem Strömungsweg gefördert werden, der in Figur 1 mit einem Pfeil 22 gekennzeichnet ist. Bei der derartigen Förderung des Brennstoffs durch das Bauteil 12 muss die Strömungsrichtung des Brennstoffs einmal in einem Winkel von zirka 90° umgelenkt und nachfolgend geteilt werden.

Diese Umlenkung und Aufteilung des Strömungsweges ist dadurch realisiert, dass in dem Bauteil 12 eine seitlich gestufte Nut 24 ausgebildet ist, in die der Einströmkanal 14 an einer Stirnseite 26 der Nut 24 mündet. In diese Nut 24 ist ein ebenfalls an den Seiten gestuft ausgebildetes Einsatzteil 28 eingepasst, in welches seinerseits ein Rohrkrümmer 30 eingesetzt ist. Der Rohrkrümmer 30 weist an einem seiner Enden einen Eintritt 32 sowie in der Mitte einen Umlenkbereich 34 und an dem entgegengesetzten Ende einen Austritt 36 für Brennstoff auf. Er ist dabei zusammen mit dem Einsatzteil 28 derart in die Nut 24 eingesetzt, dass sein Austritt 36 in eine sich in Umfangsrichtung der Brennkammer 20 in dem Bauteil 12 ausgebildeten Nut 38 mündet.

Um diese Anordnung des Rohrkrümmers 30 zu erreichen, ist dieser in eine Bohrung 40 eingeschoben, welche das Einsatzteil 28 in Form einer Durchgangsöffnung durchsetzt. Dabei ist zwischen dem Einsatzteil 28 und dem Rohrkrümmer 30 ein Schrumpfsitz 42 ausgebildet, mit dem der Rohrkrümmer 30 in dem Einsatzteil 28 ortsfest gehalten ist.

Das Einsatzteil 28 ist, wie bereits erwähnt, in die Nut 24 eingesetzt und mit Hilfe zweier Schraubverbindungen 44 dort festgelegt. Dabei ragt der den Umlenkbereich 34 bildende Abschnitt des Rohrkrümmers 30 frei aus dem Einsatzteil 28 heraus und ist in diesem Teil der Nut 24 von einem Abstands- bzw. Freiraum 46 umgeben, welcher sich zwischen der Außenseite des Rohrkrümmers 30 und der die Oberfläche des Bauteils 12 bildenden Innenseite der Nut 38 befindet.

Auf dem durch die Nut 38 gebildeten Querkanal vor dem Austritt 36 des Rohrkrümmers 30 ist schließlich noch eine Abdeckung 48 in Gestalt eines Deckblechs angeordnet, mittels der die Nut 38 abschnittsweise zur Brennkammer 20 hin verschlossen ist.

Wenn der derart angeordnete Rohrkrümmer 30 nach Durchströmen des Einströmkanals 14 von Brennstoff durchströmt wird, wird dessen Strömung im Umlenkbereich 34 von einer zunächst im Wesentlichen radialen Strömungsrichtung in eine im Wesentlichen axiale Strömungsrichtung umgelenkt. Bei diesem Umlenken prallt der strömende Brennstoff nicht unmittelbar auf Flächen des Bauteils 12, sondern wird allein vom Rohrkrümmer 30 umgelenkt. Dieser Rohrkrümmer 30 weist dabei den oben erläuterten freitragend gehalterten Rohrabschnitt auf, mit dem der Umlenkbereich 34 sowie der Austritt 36 gebildet sind. Dieser Rohrabschnitt ist von dem ebenfalls bereits erwähnten Freiraum 46 umgeben, welcher als Isolierschicht zum Bauteil 12 hin wirkt. In dem Freiraum 46 befindet sich dabei ebenfalls (zumindest geringfügig strömender) Brennstoff, welcher isolierend wirkt.

## Patentansprüche

1. Brennstoffzuführung (10) für eine Gasturbine mit einem Bauteil (12), in dem ein Kanal (14, 24, 38) ausgebildet ist, mittels dem Brennstoff hinsichtlich seiner Strömungsrichtung (22) umgelenkt werden kann,
**dadurch gekennzeichnet, dass**
ein Umlenkbereich (34) des Kanals (14, 24, 38) mit einem vom Brennstoff durchströmbaren Rohrkrümmer (30) gestaltet ist, welcher am Umlenkbereich (34) mit Abstand zu dem den Kanal (1,4 24, 38) aufnehmenden Bauteil (12) gehaltert ist.

2. Brennstoffzuführung nach Anspruch 1,
**dadurch gekennzeichnet, dass**
der Rohrkrümmer (30) derart in dem genannten Bauteil (12) gehaltert ist, dass sich in dem Abstandsraum (46) zwischen Rohrkrümmer (30) und Bauteil (12) Brennstoff befinden kann.

3. Brennstoffzuführung nach Anspruch 1 oder 2,
**dadurch gekennzeichnet, dass**
der Rohrkrümmer (30) einen Eintritt (32) sowie einen Austritt (36) für Brennstoff aufweist und im Bereich des Eintritts (32) an dem genannten Bauteil (12) befestigt ist.

4. Brennstoffzuführung nach einem der Ansprüche 1 bis 3,
**dadurch gekennzeichnet, dass**
ein Einsatzstück (28) vorgesehen ist, welches in das genannte Bauteil (12) eingesetzt und in dem der Rohrkrümmer (30) befestigt ist.

5. Brennstoffzuführung nach einem der Ansprüche 1 bis 4,
**dadurch gekennzeichnet, dass**
der Rohrkrümmer (30) in dem genannten Bauteil (12) oder dem Einsatzstück (28) mittels eines Schrumpfsitzes (42) befestigt ist.

6. Brennstoffzuführung nach einem der Ansprüche 1 bis 5,
**dadurch gekennzeichnet, dass**
der Rohrkrümmer (30) in dem genannten Bauteil (12) oder dem Einsatzstück (28) derart befestigt ist, dass sein Umlenkbereich in den zum Bauteil (12) hin gebildeten Abstandsraum (46) frei hineinragt.

7. Brennstoffzuführung nach einem der Ansprüche 1 bis 6,
**dadurch gekennzeichnet, dass**
in dem genannten Bauteil (12) eine Nut (24) ausgebildet ist, in die der Rohrkrümmer (30) eingesetzt ist und mittels der der Abstand zwischen dem Rohrkrümmer (30) und dem Bauteil (12) hergestellt ist.

8. Brennstoffzuführung nach einem der Ansprüche 1 bis 7,
**dadurch gekennzeichnet, dass**
der Rohrkrümmer (30) einen Eintritt (32) und einen Austritt (36) für Brennstoff aufweist und in Strömungsrichtung hinter dem Austritt (36) ein Querkanal (38) ausgebildet ist, mittels dem der aus dem Rohrkrümmer (30) austretende Brennstoff in zwei Richtungen abgeleitet ist.

9. Brennstoffzuführung nach Anspruch 8,
**dadurch gekennzeichnet, dass**
der Querkanal (38) mittels einer in dem Bauteil (12) ausgebildeten Vertiefung gebildet ist, welche mittels einer Abdeckung (48) zumindest abschnittsweise verschlossen ist.

10. Gasturbine mit einer Brennstoffzuführung (10) nach einem der Ansprüche 1 bis 9, deren Umlenkbereich (34) insbesondere zum Umlenken von Brennstoff aus einem axialen und/oder radialen Kanal in einen Umfangskanal vorgesehen ist.
